# EUROPEAN PATENT APPLICATION

(11) **EP 4 571 320 A1**
(43) Date of publication of application: **18.06.2025**
(21) Application number: 23852205.6
(22) Date of filing: 23.05.2023
(51) Int. Cl.: G01N 35/10

(54) **AUTOMATIC ANALYSIS DEVICE**

(30) Priority: 10.08.2022 JP 2022128102
(71) Applicant: HITACHI HIGH-TECH CORPORATION, Tokyo 105-6409 (JP)
(72) Inventor: TAMEZANE Hideto, Tokyo 105-6409 (JP); TAKAYAMA Hiroyuki, Tokyo 105-6409 (JP)
(74) Representative: MERH-IP Matias Erny Reichl Hoffmann Patentanwälte PartG mbB
(86) International application number: PCT/JP2023/019177
(87) International publication number: WO 2024/034220

(57) **Abstract**

[Problem to be Solved] To provide an automatic analyzer that can improve the reliability of inspection results by achieving lower-risk dispensation of a specimen, and also improve the inspection efficiency by reducing the number of specimen containers that cannot be used for a particular analysis module.

[Means for Solution] It includes an image obtaining unit 203 that obtains an image of a specimen container 105, a specifying unit 204 that specifies distance information from an opening of the specimen container 105 to a liquid surface of the specimen and information of a type or a diameter of the specimen container 105 from the image, a storing unit 205 that stores a threshold for the distance corresponding to the type of the specimen container 105, and a determining unit 206 that determines whether or not to dispense the specimen whose image has been obtained, according to the distance specified by the specifying unit 204 and the threshold stored in the storing unit 205.

## Description

### Technical Field

The present invention relates to an automatic analyzer for qualitatively or quantitatively analyzing a biological specimen (hereinafter referred to as a specimen) such as blood or urine.

### Background Art

PTL 1 discloses that an image obtaining unit that obtains an upper image obtained by capturing an image of a container containing an object to be sampled including a specimen or a reagent and a reaction solution from above with an imaging unit, a region calculation unit that calculates an edge region of the container or an upper surface region of the object to be sampled from the upper image, and a state determining unit that determines a state of the container or the object to be sampled according to the edge region or the upper surface region are provided.

### Citation List

### Patent Literature

PTL 1: JP2020-173101A

### Summary of Invention

### Technical Problem

In the field of clinical inspection including biochemical inspection, an automatic analyzer is generally used. An automatic analyzer performs qualitative and quantitative analysis by adding and reacting a reagent that specifically reacts with a specific component contained in a specimen such as blood or urine, and measuring absorbance or luminescence intensity of a reaction solution.

In the automatic analyzer, it is desirable to determine whether the specimen is in an appropriate state for use in inspection at an early stage in order to reduce consumption of consumables and reagents by omitting useless inspection and to improve reliability of inspection results. Therefore, a method of detecting a liquid surface position of a specimen through image processing and estimating an amount of the specimen according to the detected liquid surface position and a method of estimating a degree of hemolysis and turbidity of the specimen have been proposed.

For example, PTL 1 discloses an example of an automatic analysis system that determines an amount of a specimen contained in a specimen container based on an image acquired with a camera. In PTL 1, a type of the specimen container and the amount of the specimen are obtained from the image, and when it is determined that an amount of a dispensing target does not reach a predetermined amount, a dispensing probe or the like is stopped. According to PTL 1, an abnormality in dispensing can be avoided even when the amount of the specimen is insufficient.

In recent years, use of a specimen container having a diameter smaller than that of a specimen container used in the related art having a diameter of 13 mm has increased. In such a specimen container having a small diameter, there is a concern that a probe may come into contact with a specimen adhering to an inner wall of the specimen container due to vibration when the probe is lowered, and a risk of carryover due to unexpected specimen adhesion caused by the contact increases.

A probe thickness and a degree of vibration during lowering vary for each analysis module. Therefore, a usable specimen container is determined for each analysis module and known to a customer. However, when there is a specimen container that cannot be used for a part of analysis modules, inspection efficiency of the customer may be greatly decreased. There is also a possibility that the customer may mistakenly use a specimen container that is not approved for use, and there is a possibility that reliability of inspection results may decrease due to occurrence of carryover.

The related art disclosed in PTL 1 described above has room for avoiding the risk of carryover and the decrease in the inspection efficiency of the customer, and it is revealed through studies of the present inventors that there is room for improvement.

The invention has been made in view of the above problems, and an object thereof is to provide an automatic analyzer that can improve the reliability of inspection results by achieving lower-risk dispensation of a specimen, and also improve the inspection efficiency by reducing the number of specimen containers that cannot be used for a particular analysis module.

### Solution to Problem

The invention includes a plurality of aspects for solving the above problems, and an example thereof is an automatic analyzer for analyzing a specimen including: an image obtaining unit that obtains an image of a specimen container containing a specimen; a specifying unit that specifies a distance from an opening of the specimen container to a liquid surface of the specimen and specifies information of a type or a diameter of the specimen container from the image; a storing unit that stores a threshold for the distance, according to the type of the specimen container; and a determining unit that determines whether or not to dispense the specimen whose image has been obtained, according to the distance specified by the specifying unit and the threshold stored in the storing unit.

### Advantageous Effects of Invention

According to the invention, the reliability of inspection results can be improved, and the inspection efficiency can also be improved by reducing the number of specimen containers that cannot be used for a particular analysis module. Problems, configurations, and effects other than those described above will be clarified by the following description of embodiments.

### Brief Description of Drawings

[Fig. 1] Fig. 1 is a top surface view showing a schematic configuration of an automatic analyzer according to a first embodiment.
[Fig. 2] Fig. 2 is a functional block diagram showing the details of a control unit in the automatic analyzer according to the first embodiment.
[Fig. 3] Fig. 3 is a schematic view showing a distance from an opening of a specimen container to a liquid surface of the specimen, which is specified by the control unit in the automatic analyzer according to the first embodiment.
[Fig. 4] Fig. 4 is a flow chart of a series of processing in the control unit according to the first embodiment.
[Fig. 5] Fig. 5 is a functional block diagram showing the details of a control unit according to an automatic analyzer according to a second embodiment.
[Fig. 6] Fig. 6 is a flow chart of a series of processing in the control unit according to the second embodiment.

### Description of Embodiments

Hereinafter, embodiments of an automatic analyzer of the invention will be described with reference to the drawings. In the following embodiment, it is needless to mention that components (also including element steps and the like) thereof are not necessarily essential unless otherwise specified or unless clearly considered to be essential in principle. In the drawings used in the description, the same or corresponding components are denoted by the same or similar reference signs, and repeated description of these components may be omitted.

### <First Embodiment>

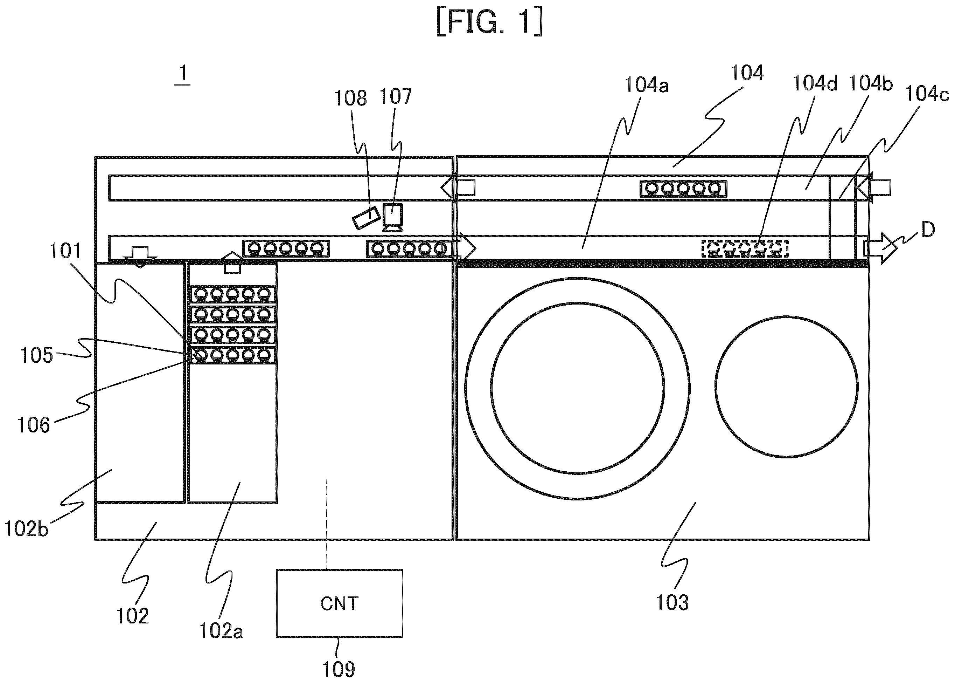

A first embodiment of the automatic analyzer according to the invention will be described with reference to Figs. 1 to 4.

First, an overall configuration of the automatic analyzer will be described with reference to Figs. 1 to 4. Fig. 1 is a top surface view showing an outline of the automatic analyzer.

An automatic analyzer 1 for analyzing a specimen shown in Fig. 1 includes a specimen supplying unit 102 including a carry-in port 102a and a carry-out port 102b for a specimen 101, an analysis module 103 for dispensing and measuring a certain amount of the specimen 101, and a conveying unit 104 for transferring the specimen 101.

In the automatic analyzer 1, a specimen container 105 where the specimen 101 is charged is transferred in a state of being stored in a specimen rack 106 in order to protect the specimen 101 and improve workability. The specimen rack 106 may hold and convey a plurality of containers or a single container. An arrow D in Fig. 1 indicates a transfer direction of the specimen rack 106.

The conveying unit 104 includes a feed passage of carry-in rack 104a for conveying the specimen rack 106 from the specimen supplying unit 102 to the analysis module 103, a feed passage of carry-out rack 104b for conveying the specimen rack 106 from the analysis module 103 to the specimen supplying unit 102, and a feed passage for connection 104c for connecting the feed passage of carry-in rack 104a and the feed passage of carry-out rack 104b. A specimen dispensation position 104d is provided in a region of the feed passage of carry-in rack 104a for performing specimen dispensation in the analysis module 103.

Beside the feed passage of carry-in rack 104a, a camera 107 focused on the feed passage of carry-in rack 104a and an illumination 108 illuminating the feed passage of carry-in rack 104a are fixed near an outlet from the specimen supplying unit 102 to the analysis module 103.

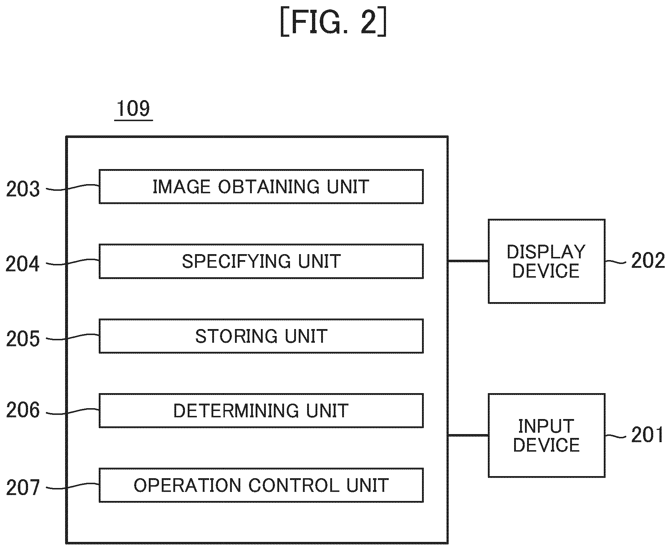

A controller 109 is connected to each device in the automatic analyzer 1 described above in a wired or wireless manner, and controls an operation of each device in the automatic analyzer 1. The operation of each device is controlled by the controller 109 according to various programs recorded in a storing device (not shown). The storing device stores, in addition to various programs used to measure the specimen, various parameters received via an input device 201 (see Fig. 2), information of a measurement target specimen (specimen type information and the like), a measurement result, and the like. Operation control processing executed by the controller 109 may be integrated into one program, may be divided into a plurality of programs, or may be a combination thereof. A part or all of the programs may be implemented by dedicated hardware or may be modularized.

An overall configuration of the automatic analyzer 1 is described above.

Next, functions of the controller 109 in the automatic analyzer 1 of the present embodiment will be described in detail with reference to Fig. 2. Fig. 2 is a functional block diagram showing the details of the functions of the controller 109.

As shown in Fig. 2, the controller 109 includes, in addition to the input device 201 and a display device 202, various functional blocks such as an image obtaining unit 203, a specifying unit 204, a storing unit 205, a determining unit 206, and an operation control unit 207 that controls operations of various mechanisms.

The image obtaining unit 203 obtains an image of the specimen container 105 containing the specimen, which is captured using the camera 107.

The specifying unit 204 specifies information of a type or a diameter of the specimen container 105 containing the specimen from the image of the specimen container 105 obtained by the image obtaining unit 203. The type or the diameter of the specimen container 105 is preferably specified according to image information obtained by capturing an image of the target specimen container 105 with the camera from beside or from above, but the method is not limited thereto.

The specifying unit 204 specifies a distance from an opening of the specimen container 105 to a liquid surface of the specimen. A method for specifying the distance from the opening to the liquid surface of the specimen is desirably performed based on the image of the specimen container 105 obtained by the image obtaining unit 203, and other methods such as laser light may be used. However, it is desirable not to adopt a capacitive method in which a specimen dispensing probe directly accesses the inside of the specimen container 105 in order to detect the liquid surface of the specimen.

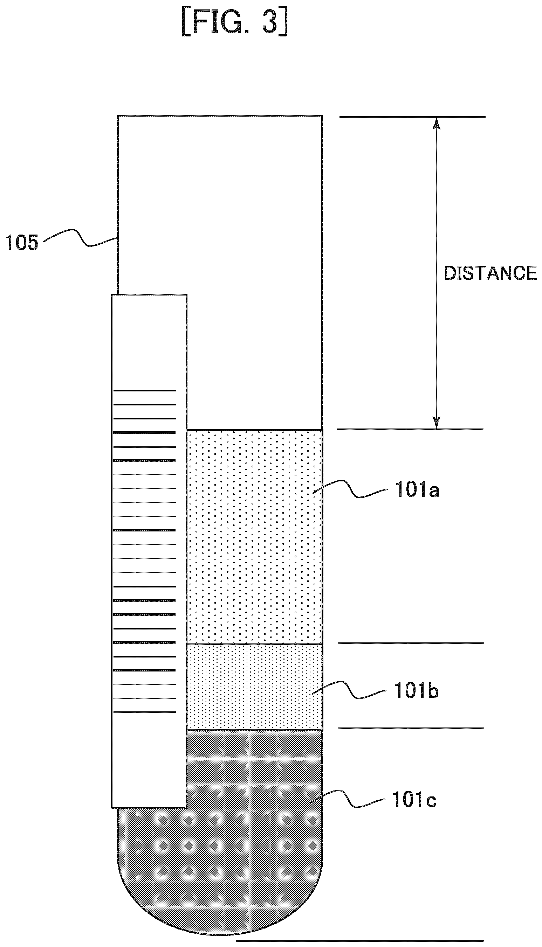

Fig. 3 is a schematic view showing the distance from the opening of the specimen container to the liquid surface of the specimen. An example is shown in which the specimen is separated into three layers, that is, a blood serum layer 101a, a separating agent layer 101b, and a blood clot layer 101c, and in this case, the distance from the opening of the specimen container 105 to an upper end of the blood serum layer 101a is specified.

The storing unit 205 stores, in addition to various parameters for operating each mechanism in the automatic analyzer 1, information of the specimen, various types of information necessary for analyzing the specimen, and the like, a threshold for the distance according to a type of the analysis module 103, a type of the specimen container 105, or a diameter of the opening of the specimen container 105.

The "threshold for the distance" may be, for example, a value varying depending on a diameter of the specimen dispensing probe. Specifically, since the specimen dispensing probe having a large diameter has less vibration during lowering, a possibility of unexpected contact with an inner wall of the specimen container 105 is small, and thus the threshold can be large, and since vibration increases as the diameter of the specimen dispensing probe decreases, the possibility of contact increases, and thus the threshold can be small. Since the possibility of contact is small, the threshold can be larger as the diameter of the opening of the specimen container 105 increases, and the threshold can be smaller as the diameter of the opening decreases, which increases the possibility of contact.

The determining unit 206 determines whether or not to dispense the specimen whose image has been obtained, according to the distance specified by the specifying unit 204 and the threshold stored in the storing unit 205. For example, the determining unit 206 determines cancel of dispensation of the specimen when the distance specified by the specifying unit 204 is larger than the threshold stored in the storing unit 205 and determines dispensation of the specimen when the above is the threshold and less.

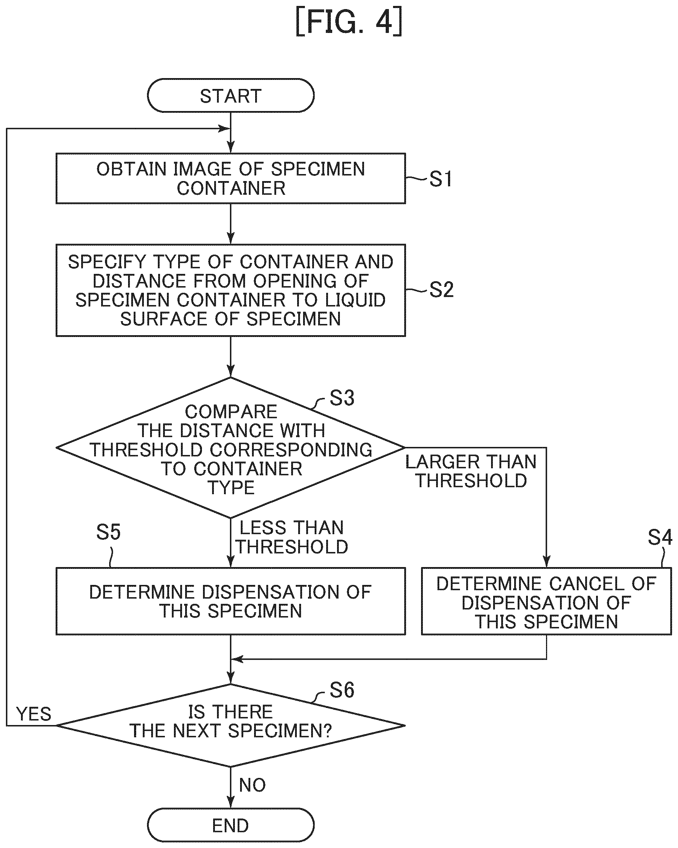

Next, processing contents according to the embodiment preferably executed in the automatic analyzer 1 described above will be described with reference to Fig. 4. Fig. 4 is a flow chart of a series of processing in the control unit in the automatic analyzer according to the embodiment, and an operation control entity is preferably the controller 109.

First, when an analysis start is instructed from the input device 201 by an operation of a user, the image obtaining unit 203 of the controller 109 causes the operation control unit 207 to convey the specimen rack 106 and obtains image information of the specimen container 105 captured with the camera 107 (S11).

Next, the specifying unit 204 of the controller 109 specifies the type of the specimen container 105 and the distance from the opening of the specimen container 105 to the liquid surface of the specimen according to the image information obtained in S1 (S2).

Next, the determining unit 206 of the controller 109 performs determination by comparing the distance from the opening of the specimen container 105 to the liquid surface of the specimen specified in S2 with the threshold corresponding to the type of the specimen container 105 or the diameter of the opening thereof specified in S2 stored in the storing unit 205 (S3).

When it is determined in S3 that the distance from the opening of the specimen container 105 to the liquid surface of the specimen is larger than the threshold and is not suitable for dispensation, the processing proceeds to S4, the dispensation of the specimen is canceled (S4), and it is determined whether or not there is a next specimen (S6).

When the dispensation of the specimen is canceled in S4, it is desirable that the determining unit 206 issues an alarm indicating the cancel and displays the alarm on the display device 202.

It is conceivable that such a "warning" may be expressed as a system alarm on a screen of the display device 202 and may be added to an analysis result accompanying the cancel. In this case, it is desirable to skip only analysis of the specimen contained in the corresponding specimen container 105 and continue to analyze another specimen without interrupting the analysis. However, in a case where no other specimen container 105 is placed in the same rack or the rack is a single-container rack, it is desirable to convey the specimen container 105 to an outlet directly. After returning, it is conceivable to take measures such as transferring the specimen to a small cup or a thick container or re-sampling according to a usage environment of the user of the automatic analyzer 1.

When the determination result in S6 is YES, that is, when there is the next specimen, the processing returns to S1. On the other hand, when the determination result is NO, that is, when there is no specimen requested to be analyzed, the processing is ended.

On the other hand, when it is determined in S3 that the distance from the opening of the specimen container 105 to the liquid surface of the specimen is smaller than the threshold and is suitable for dispensation, the processing proceeds to S5, the dispensation of the specimen is determined (S5), and it is determined whether or not there is the next specimen (S6).

Next, effects of the embodiment will be described.

The automatic analyzer 1 for analyzing the specimen according to the first embodiment of the invention includes the image obtaining unit 203 that obtains the image of the specimen container 105 containing the specimen, the specifying unit 204 that specifies the distance from the opening of the specimen container 105 to the liquid surface of the specimen and specifies the information of the type or the diameter of the specimen container 105 from the image, the storing unit 205 that stores the threshold for the distance, according to the type of the specimen container 105, and the determining unit 206 that determines whether or not to dispense the specimen whose image has been obtained, according to the distance specified by the specifying unit 204 and the threshold stored in the storing unit 205.

Accordingly, it is possible to solve the problems to be improved in the related art, such as a situation in which a risk of collision between the inner wall of the specimen container 105 and the dispensing probe increases when a lowering amount of the dispensing probe is large, or a situation in which carryover may be caused since the specimen adheres to an unexpected portion of the dispensing probe and is not completely cleaned, in response to the demand for further reducing a diameter of the dispensing probe in recent years.

Accordingly, the automatic analyzer 1 of the first embodiment can improve the reliability of inspection results by achieving lower-risk dispensation of the specimen, and also improve the inspection efficiency as compared with the related art by reducing types of the specimen container 105 that cannot be used for a particular analysis module as compared with the related art.

The determining unit 206 determines the cancel of the dispensation of the specimen when the distance specified by the specifying unit 204 is larger than the threshold stored in the storing unit 205 and determines the dispensation of the specimen when the above is the threshold and less, and thus the dispensation can be canceled under a condition where there is a strong concern of the contact between the dispensing probe and the inner wall of the specimen container 105, and low-risk dispensation of the specimen can be achieved.

Further, the determining unit 206 issues the alarm when determining the cancel, thus the user can be aware of the cancel of the analysis due to inability to dispense, thus can determine whether or not to take an action, and thus can avoid prolonging a time before an analysis result is finally obtained.

By specifying the distance from the image of the specimen container 105, the specifying unit 204 can directly use the image used when specifying the information of the type or the diameter, thus a configuration or an operation for obtaining the information is not necessary, and a load until the specification can be further reduced.

Further, the threshold varies according to the diameter of the specimen dispensing probe, increases as the diameter of the opening becomes larger, decreases as the diameter of the opening portion becomes smaller, and thus more stable dispensation of the specimen can be achieved.

### <Second Embodiment>

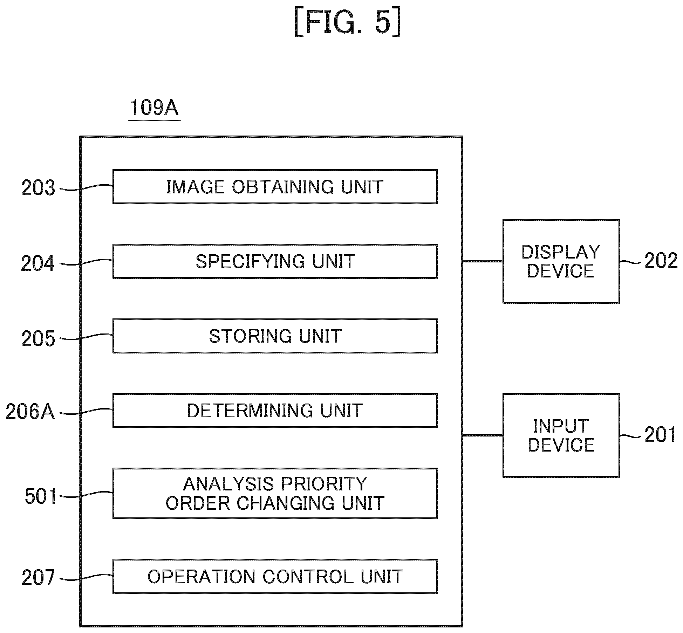

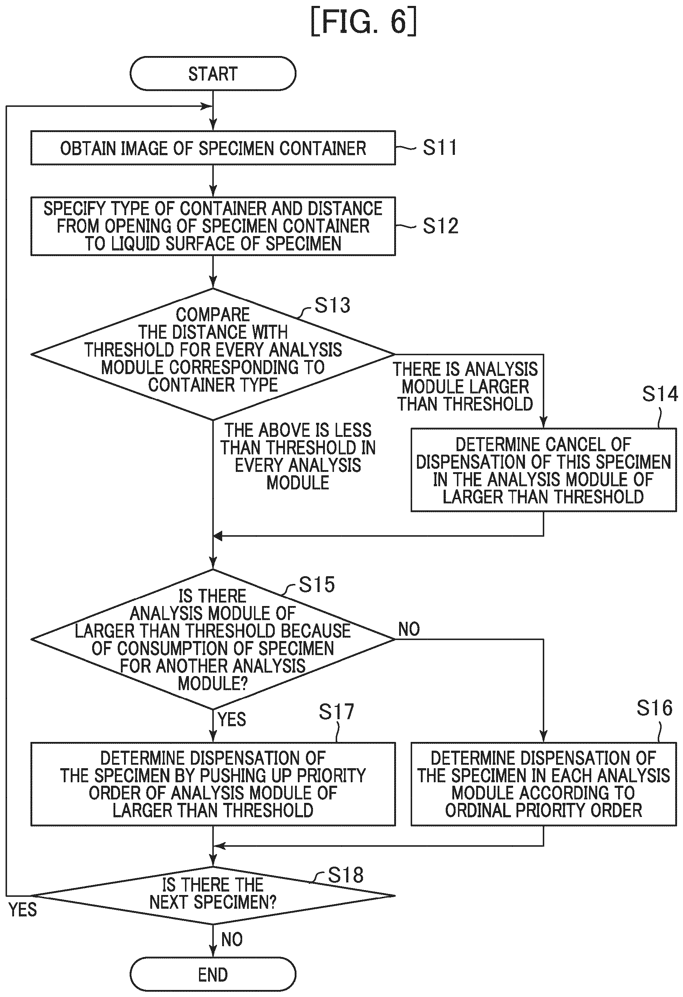

An automatic analyzer according to a second embodiment of the invention will be described with reference to Figs. 5 and 6. Fig. 5 is a functional block diagram showing the details of a control unit according to the automatic analyzer according to the second embodiment, and Fig. 6 is a flow chart of a series of processing in the control unit in the automatic analyzer according to the second embodiment.

The first embodiment is an aspect in which the processing contents are determined by specifying the distance from the opening of the specimen container 105 to the liquid surface of the specimen in the automatic analyzer 1 to which the single analysis module 103 is connected. In contrast, the automatic analyzer of the second embodiment is an aspect in which a plurality of analysis modules 103 are connected.

In a configuration having a plurality of analysis modules 103, it is desirable to compare the distance from the opening of the specimen container 105 to the liquid surface of the specimen calculated from a consumption amount of the specimen in each analysis module 103 with a threshold to optimize a conveyance order.

Specifically, a determining unit 206A determines whether there is the analysis module 103 that performs dispensing at a timing when the distance becomes larger than the threshold because of consumption of the specimen for the other analysis module 103; when there is the analysis module 103 of larger than the threshold because of the consumption of the specimen for the other analysis module 103, an analytical priority order changing unit 501 can push up a priority order of dispensation in the analysis module 103 and postpone dispensation in the analysis module 103 that does not exceed the threshold even after dispensing in the other analysis module 103.

The configuration of the automatic analyzer in the second embodiment is the same as that of the automatic analyzer 1 in the first embodiment except that a plurality of analysis modules 103 are connected, and thus illustration and detailed description thereof will be omitted.

The functional block diagram of a controller 109A according to the second embodiment shown in Fig. 5 is different from the functional block diagram of the controller 109 shown in Fig. 2 according to the first embodiment in that the configuration of the determining unit 206A is partially different and the analytical priority order changing unit 501 is added to the configuration in Fig. 2.

As described above, when the determining unit 206A determines that there is the analysis module 103 in which the distance from the opening of the specimen container 105 to the liquid surface of the specimen exceeds the threshold because of the consumption of the specimen for the other analysis module 103, the analytical priority order changing unit 501 in the controller 109A shown in Fig. 5 determines a change in an analytical order of the corresponding analysis module 103 to give higher priority than usual based on the determination result of the determining unit 206A.

Next, processing contents according to the embodiment preferably executed in the automatic analyzer 1 described above will be described with reference to Fig. 6.

In Fig. 6, S11 is the same as S1 shown in Fig. 4, and S12 is the same as S2 shown in Fig. 4.

Next, the determining unit 206A of the controller 109A performs determination by comparing the distance from the opening of the specimen container 105 to the liquid surface of the specimen specified in S12 with the threshold for every analysis module 103 corresponding to the type of the specimen container specified in S2 stored in the storing unit 205 as a container type (S13).

When it is determined in S13 that there is the analysis module 103 in which the distance from the opening of the specimen container 105 to the liquid surface of the specimen is larger than the threshold and which is not suitable for dispensing, the processing proceeds to S14, only dispensation in the corresponding analysis module 103 larger than the threshold is canceled (S14), and the processing proceeds to S15.

When the dispensation of the specimen is canceled in S14, it is desirable that the determining unit 206 issues an alarm indicating the cancel and displays the alarm on the display device 202.

On the other hand, when it is determined in S13 that there is no analysis module 103 in which the distance from the opening of the specimen container 105 to the liquid surface of the specimen is larger than the threshold and which is not suitable for dispensing, the processing proceeds to S15, and it is checked whether there is the analysis module 103 in which the distance from the opening of the specimen container 105 to the liquid surface of the specimen exceeds the threshold because of the consumption of the specimen for the other analysis module 103 (S15).

When there is no analysis module 103 that is larger than the threshold because of the consumption for the other analysis module 103, the dispensation of the specimen in every analysis module 103 is determined according to an ordinal priority order (S16), and it is determined whether or not there is a next specimen (S18).

On the other hand, when there is the analysis module 103 larger than the threshold because of consumption for the other analysis module 103, a change for giving higher priority of the analysis in the analysis module 103 than usual is determined (S17), and it is determined whether or not there is a next specimen (S18).

When the determination result in S18 is YES, that is, when there is the next specimen, the processing returns to S11. On the other hand, when the determination result is NO, that is, when there is no specimen requested to be analyzed, the processing is ended.

Other configurations and operations are substantially the same as those in the automatic analyzer 1 according to the first embodiment described above, and details thereof are omitted.

In the automatic analyzer according to the second embodiment of the invention, substantially the same effects as those of the automatic analyzer 1 according to the first embodiment described above can also be obtained.

The determining unit 206A determines whether there is the analysis module 103 that performs dispensing at a timing when the distance becomes larger than the threshold because of consumption of the specimen for the other analysis module 103; when there is the analysis module 103 of larger than the threshold, the dispensation in this analysis module 103 is given priority, thus an analytical order can be changed if necessary, and thus inspection can be performed with higher efficiency.

### <Others>

The invention is not limited to the above-described embodiments, and includes various modifications. The above embodiments have been described in detail to facilitate understanding of the invention, and the invention is not necessarily limited to those including all the configurations described above.

### Reference Signs List

- 1:: automatic analyzer
- 101:: specimen
- 101a:: blood serum layer
- 101b:: separating agent layer
- 101c:: blood clot layer
- 102:: specimen supplying unit
- 102a:: carry-in port
- 102b:: carry-out port
- 103:: analysis module
- 104:: conveying unit
- 104a:: feed passage of carry-in rack
- 104b:: feed passage of carry-out rack
- 104c:: feed passage for connection
- 104d:: specimen dispensation position
- 105:: specimen container
- 106:: specimen rack
- 107:: camera
- 108:: illumination
- 109, 109A:: controller
- 201:: input device
- 202:: display device
- 203:: image obtaining unit
- 204:: specifying unit
- 205:: storing unit
- 206, 206A:: determining unit
- 207:: operation control unit
- 501:: analytical priority order changing unit

## Claims

1. An automatic analyzer for analyzing a specimen, comprising:
an image obtaining unit that obtains an image of a specimen container containing a specimen;
a specifying unit that specifies a distance from an opening of the specimen container to a liquid surface of the specimen and specifies information of a type or a diameter of the specimen container from the image;
a storing unit that stores a threshold for the distance, according to the type of the specimen container; and
a determining unit that determines whether or not to dispense the specimen whose image has been obtained, according to the distance specified by the specifying unit and the threshold stored in the storing unit.

2. The automatic analyzer according to claim 1, wherein
the determining unit determines cancel of dispensation of the specimen when the distance specified by the specifying unit is larger than the threshold stored in the storing unit and determines dispensation of the specimen when the above is the threshold and less.

3. The automatic analyzer according to claim 1, wherein
when the automatic analyzer includes a plurality of analysis modules for analyzing the specimen,
the determining unit determines whether there is the analysis module that performs dispensation at a timing when the distance becomes larger than the threshold because of consumption of the specimen for the other analysis module; when there is the analysis module of larger than the threshold, the dispensation in this analysis module is given priority.

4. The automatic analyzer according to claim 2, wherein
the determining unit issues an alarm when determining the cancel.

5. The automatic analyzer according to claim 1, wherein
the specifying unit specifies the distance from the image of the specimen container.

6. The automatic analyzer according to claim 1, wherein
the threshold varies according to a diameter of a specimen dispensing probe.

7. The automatic analyzer according to claim 1, wherein
the threshold becomes larger according as the diameter of the opening is larger and smaller according as the above diameter is smaller.
